# EUROPÄISCHE PATENTSCHRIFT

(11) **EP 0 999 398 B1**
(45) Veröffentlichungstag und Bekanntmachung des Hinweises auf die Patenterteilung: **18.12.2002**
(21) Anmeldenummer: 99118185.0
(22) Anmeldetag: 13.09.1999
(51) Int. Cl.: F16L 37/084

(54) **Steckverbinder**
Plug-in connector
Raccord à fiche

(30) Priorität: 05.11.1998 DE 19850963
(43) Veröffentlichungstag der Anmeldung: 10.05.2000
(73) Patentinhaber: Voss Automotive GmbH, 51688 Wipperfürth (DE)
(72) Erfinder: Offermann, Olaf, 51688 Wipperfürth (DE); Kaminski, Volker, 58553 Halver (DE)
(74) Vertreter: Patentanwälte Dr. Solf & Zapf

(56) Entgegenhaltungen:
- CH-A- 677 964
- DE-U- 9 405 775
- GB-A- 2 244 774
- US-A- 5 609 370

## Beschreibung

Die vorliegende Erfindung betrifft einen Steckverbinder für Schlauch- und/oder Rohrleitungen, gemäß dem Obergriff von Anspruch 1.

Derartige Steckverbinder sind aus zahlreichen Veröffentlichungen hinlänglich bekannt, z.B. CH 677964. Sie dienen zum schnellen und lösbaren Verbinden von Schlauch- und/oder Rohrleitungen in Druckmittelsystemen. Bei bekannten Steckverbindern der gattungsgemäßen Art ist als Umfangsdichtung zumeist ein Dichtring in einer äußeren Ringnut am Steckerschaft angeordnet. Dies kann beim Einstecken zu Problemen führen, wenn der Steckerschaft geringfügig gegen die Steckachse verkantet wird; es kann dann zu Beschädigungen der Umfangsdichtung kommen.

Der vorliegenden Erfindung liegt die Aufgabe zugrunde, den Einsteckvorgang und die Verriegelung zu verbessern. Bei gegebenenfalls unsachgemäßer Handhabung sollen auch Beschädigungen im Bereich der Umfangsdichtung weitgehend ausgeschlossen sein.

Erfindungsgemäß wird dies dadurch erreicht, daß die Verriegelungseinrichtung aus mindestens zwei diametral gegenüberliegenden, sich axial in Löserichtung etwa parallel zur Steckachse erstreckenden, in radialer Richtung federelastischen Rastarmen des Steckerteils besteht, wobei die Rastarme im eingesteckten Zustand jeweils eine innerhalb der Aufnahmeöffnung des Muffenteils gebildete Hinterschneidungsfläche formschlüssig hintergreifen.

Durch diese vorteilhafte Ausgestaltung wird zunächst eine selbsttätige Zentrierung des Steckerteils innerhalb des Muffenteils erreicht, indem der innerhalb des Muffenteils angeordnete Steckzapfen bereichsweise in den Steckerschaft eingreift. Hierdurch wird dann auch die Umfangsdichtung effektiv geschützt, zumal sie gekammert innerhalb des Steckerschaftes sitzt, und zwar in dessen Endbereich, in den auch der Steckzapfen des Muffenteils eingreift.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll die Erfindung näher erläutert werden. Dabei zeigen:
- Fig. 1: eine Draufsicht auf den erfindungsgemäßen Steckverbinder in Einsteckrichtung des Steckerteils,
- Fig. 2: einen Teilschnitt durch den Steckverbinder der Ebene II-II gemäß Fig. 1,
- Fig. 3: einen deutlich vergrößerten Teilschnitt in der Ebene III-III gemäß Fig. 2,
- Fig. 4: eine Ausschnittvergrößerung des Bereichs IV in Fig. 3 und
- Fig. 5: eine weitere Ausschnittvergrößerung des Bereichs V in Fig. 3.

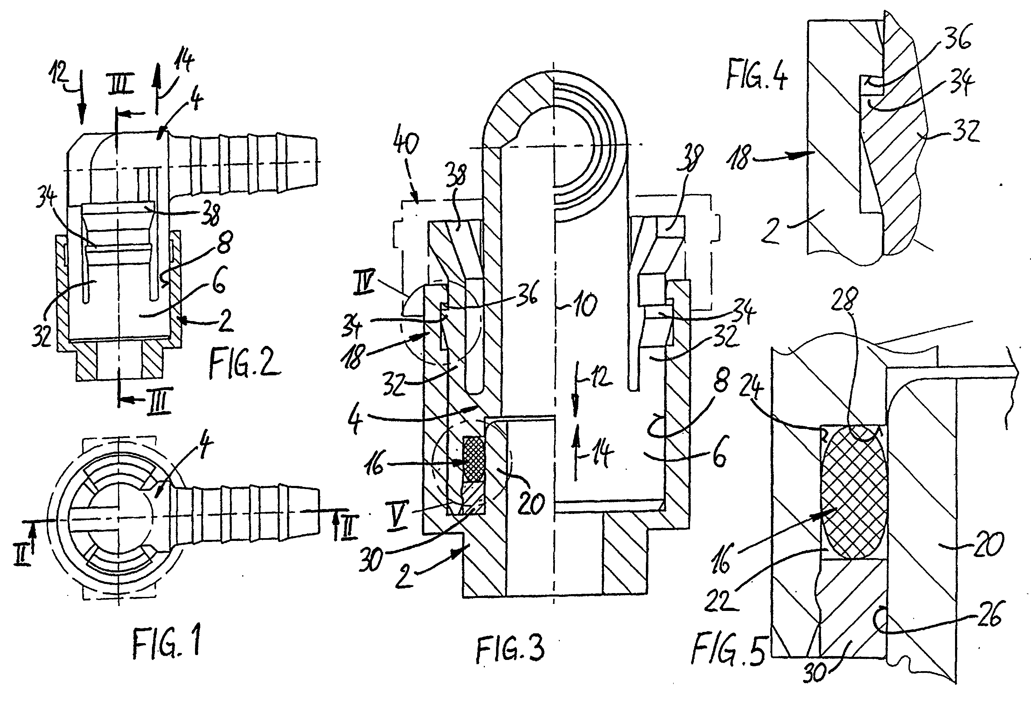

Ein erfindungsgemäßer Steckverbinder besteht aus einem Muffenteil (2) und einem Steckerteil (4). Das Steckerteil (4) ist mit einem Steckerschaft (6) in eine Aufnahmeöffnung (8) des Muffenteils (2) längs einer Steckachse (10) einsteckbar. In Fig. 2 und 3 sind die Einsteckrichtung mit einem Pfeil (12) und die Löse- bzw. Herausziehrichtung mit einem Pfeil (14) gekennzeichnet.

Das gesteckte Steckerteil (4) ist gegen das Muffenteil (2) über eine Umfangsdichtung (16) abgedichtet sowie über eine Verriegelungseinrichtung (18) lösbar gegen Herausziehen arretiert.

Erfindungsgemäß ist innerhalb des Muffenteils (2) ein relativ kurzer, hohlzylindrischer, axial in den eingesteckten Steckerschaft (6) eingreifender Steckzapfen (20) angeordnet. Dabei ist die Umfangsdichtung (16) in einer Ringkammer (22) gekammert und dadurch geschützt angeordnet, welche Ringkammer (22) im radial zwischen dem Steckzapfen (20) und dem Steckerschaft (6) liegenden Bereich gebildet ist. Hierzu wird insbesondere auf Fig. 3 und 5 verwiesen.

Zweckmäßigerweise wird die die Umfangsdichtung (16) aufnehmende Ringkammer (22) in radialer Richtung einerseits nach außen durch einen den Innendurchmesser erweiternde Ausnehmung (24) des Steckerschaftes (6) sowie andererseits nach innen von einer äußeren, zylindrischen Umfangsfläche (26) des Steckzapfens (20) begrenzt. Weiterhin wird die Ringkammer (22) in axialer Richtung einerseits von einer radialen, die innere Ausnehmung (24) in Löserichtung (Pfeil 14) begrenzenden Stufenfläche (28) des Steckerschaftes (6) und andererseits von einem im freien Endbereich eingesetzten Stützring (30) begrenzt. Dieser Stützring (30) bildet praktisch zusammen mit der Ausnehmung (24) eine innere, radial nach offene Ringnut innerhalb des Steckerschaftes (6). Zweckmäßigerweise ist hierbei der Stützring (30) innerhalb des Steckerschaftes (6) über eine Rastverbindung gehalten.

Die Verriegelungseinrichtung (18) besteht aus mindestens zwei einstückig mit dem Steckerteil (4) ausgebildeten Rastarmen (32). Diese Rastarme (32) sind diametral gegenüberliegend angeordnet und erstrecken sich axial in Löserichtung (14) etwa parallel zur Steckachse (10) und derart radial vom Steckerteil (4) beabstandet, daß sie in radialer Richtung federelastisch ausgebildet sind. Die Rastarme (32) hintergreifen mit nasenartigen Rastkanten (34) im eingesteckten Zustand jeweils eine innerhalb der Aufnahmeöffnung (8) des Muffenteils (2) gebildete Hinterschneidungsfläche (36) formschlüssig. Hierzu wird insbesondere auf die vergrößerte Darstellung in Fig. 4 hingewiesen. Als Hinterschneidungsfläche (36) kann entweder eine umlaufende, ringförmige Hinterstechung innerhalb der Aufnahmeöffnung (8) gebildet sein, oder es handelt sich um radiale Durchgangsöffnungen im Bereich der Rastkanten (34) der Rastarme (32).

Zweckmäßigerweise sitzen die Rastarme (32) an ihren freien, in Löserichtung (14) weisenden Enden bis außerhalb des Muffenteils (2) vorstehende Betätigungsabschnitte (38) auf. Mittels dieser Betätigungsabschnitte (38) können die Rastarme (32) manuell zum Lösen betätigt, d. h. radial nach innen elastisch verformt werden, so daß nachfolgend das Steckerteil (4) aus dem Muffenteil (2) entnommen werden kann (Pfeil 14).

In weiterer vorteilhafter Ausgestaltung der Erfindung kann eine in Fig. 3 gestrichelt eingezeichnete, den Einsteckbereich überdeckende, lösbar fixierte Schutzkappe (40) vorgesehen sein. Diese Schutzkappe (40) überdeckt den Mündungsbereich der Muffen-Aufnahmeöffnung (8) vollständig bis zum eingesteckten Steckerteil (4) einschließlich der Rastarme (32), so daß eine effektive Schmutzabdichtung gewährleistet ist. Ferner wird durch die Schutzkappe (40) vorteilhafterweise auch ein ungewolltes Lösen bzw. Endarretieren der Verriegelungseinrichtung (18) vermieden, weil vor einer Lösebetätigung der Rastarme zunächst die Schutzkappe (40) entfernt werden muß, da ansonsten die Rastarme bzw. deren Betätigungsabschnitte (38) nicht zugänglich wären.

Zweckmäßigerweise ist zumindest das Steckerteil (4) einschließlich der elastischen Rastarme (32) als einteiliges Kunststoff-Formteil ausgebildet. Vorzugsweise gilt entsprechendes auch für das Muffenteil (2).

## Patentansprüche

1. Steckverbinder für Schlauch- und/oder Rohrleitungen, bestehend aus einem Muffenteil (2) und einem Steckerteil (4), wobei das Steckerteil (4) mit einem Steckerschaft (6) in eine Aufnahmeöffnung (8) des Muffenteils (2) einsteckbar ist, und wobei das gesteckte Steckerteil (4) gegen das Muffenteil (2) über eine Umfangsdichtung (16) abgedichtet sowie über eine Verriegelungseinrichtung (18) gegen Herausziehen arretiert ist, wobei innerhalb des Muffenteils (2) ein hohlzylindrischer, axial in den eingesteckten Steckerschaft (6) eingreifender Steckzapfen (20) angeordnet ist, und wobei die Umfangsdichtung (16) in einer im radial zwischen dem Steckzapfen (20) des Muffenteils (2) und dem Steckerschaft (6) liegenden Bereich gebildeten Ringkammer (22) angeordnet ist,
**dadurch gekennzeichnet, dass** die Verriegelungseinrichtung (18) aus mindestens zwei diametral gegenüberliegenden, sich axial in Löserichtung (14) etwa parallel zur Steckachse (10) erstreckenden, in radialer Richtung federelastischen Rastarmen (32) des Steckerteils (4) besteht, wobei die Rastarme (32) im eingesteckten Zustand jeweils eine innerhalb der Aufnahmeöffnung (8) des Muffenteils (2) gebildete Hinterschneidungsfläche (36) formschlüssig hintergreifen.

2. Steckverbinder nach Anspruch 1,
**dadurch gekennzeichnet, dass** die Rastarme (32) an ihrem freien, in Löserichtung (14) weisenden Enden außerhalb des Muffenteils (2) vorstehende Betätigungsabschnitte (38) aufweisen.

3. Steckverbinder nach Anspruch 1 oder 2,
**dadurch gekennzeichnet, dass** die die Umfangsdichtung (16) aufnehmende Ringkammer (22) durch eine innere, den Innendurchmesser erweiternde Ausnehmung (24) des Steckerschaftes (6) gebildet ist und radial nach innen von einer äußeren, zylindrischen Umfangsfläche (26) des Muffen-Steckzapfens (20) begrenzt wird.

4. Steckverbinder nach einem der Ansprüche 1 bis 3,
**dadurch gekennzeichnet, dass** die Ringkammer (22) In axialer Richtung einerseits von einer radialen Stufenfläche (28) des Steckerschaftes (6) und andererseits von einem im freien Endbereich eingesetzten Stützring (30) begrenzt wird.

5. Steckverbinder nach Anspruch 4,
**dadurch gekennzeichnet, dass** der Stützring (30) in den Steckerschaft (6) eingerastet ist.

6. Steckverbinder nach einem der Ansprüche 1 bis 5,
**gekennzeichnet durch** eine den Einsteckbereich überdeckende, lösbar fixierte Schutzkappe (40).

7. Steckverbinder nach einem der Ansprüche 1 bis 6,
**dadurch gekennzeichnet, dass** zumindest das Steckerteil (4) als einteiliges Kunststoff-Formteil ausgebildet ist.

## Claims

1. Plug-in connector for hose lines and/or pipelines, comprising a socket part (2) and a plug part (4), the plug part (4) being insertable with a plug shank (6) into a receiving opening (8) of the socket part (2), and the inserted plug part (4) being sealed against the socket part (2) by means of a circumferential seal (16) and being arrested against pulling out by means of a locking device (18), a hollow-cylindrical spigot (20) engaging axially in the inserted plug shank (6) being arranged within the socket part (2), and the circumferential seal (16) being arranged in an annular chamber (22) formed in the region lying radially between the spigot (20) of the socket part (2) and the plug shank (6) , **characterized in that** the locking device (18) comprises at least two diametrically opposite engaging arms (32) of the plug part (4), which extend axially in the direction of release (14), approximately parallel to the plug-in axis (10) and are resilient in the radial direction, the engaging arms (32) respectively engaging in the plugged-in state positively behind an undercut surface (36) formed within the receiving opening (8) of the socket part (2).

2. Plug-in connector according to Claim 1, **characterized in that** the engaging arms (32) have at their free ends, pointing in the direction of release (14), actuating portions (38) projecting outside the socket part (2).

3. Plug-in connector according to Claim 1 or 2, **characterized in that** the annular chamber (22) receiving the circumferential seal (16) is formed by an inner recess (24) of the plug shank (6), said recess widening the inside diameter, and is bounded radially inwards by an outer, cylindrical circumferential surface (26) of the socket spigot (20).

4. Plug-in connector according to one of Claims 1 to 3, **characterized in that** the annular chamber (22) is bounded in the axial direction on the one hand by a radial step surface (28) of the plug shank (6) and on the other hand by a supporting ring (30) fitted in the free end region.

5. Plug-in connector according to Claim 4, **characterized in that** the supporting ring (30) is snap-fitted into the plug shank (6).

6. Plug-in connector according to one of Claims 1 to 5, **characterized by** a releasably fixed protective cap (40), covering the plugging-in region.

7. Plug-in connector according to one of Claims 1 to 6, **characterized in that** at least the plug part (4) is formed as a one-part plastics moulding.

## Revendications

1. Raccord à emmanchement pour conduites du type tuyau ou tube, composé d'une partie manchon (2) et d'une partie mâle (4), dans lequel la partie mâle (4) peut être emmanchée par une tige mâle (6) dans une ouverture réceptrice (8) de la partie manchon (2), et dans lequel la partie mâle (4) emmanchée est montée à joint étanche par rapport à la partie manchon (2) au moyen d'une garniture d'étanchéité périphérique (16) et est arrêtée à l'encontre de l'extraction au moyen d'un dispositif de verrouillage (18), cependant qu'à l'intérieur de la partie manchon (2) est disposé un téton mâle (20) de forme cylindrique creuse, qui est engagé axialement dans la tige mâle (6) emmanchée, et que la garniture d'étanchéité périphérique (16) est disposée dans une chambre annulaire (22) formée dans la région située radialement entre le téton mâle (20) de la partie manchon (2) et la tige mâle (6),
**caractérisé en ce que** le dispositif de verrouillage (18) est composé d'au moins deux bras d'enclenchement (32) diamétralement opposés de la partie mâle (4) qui s'étendant axialement dans la direction de la séparation (14) à peu près parallèlement à l'axe d'emmanchement (10) et qui sont élastiques à la façon de ressorts dans la direction radiale, les bras d'enclenchement (32) étant accrochés par sûreté de forme à l'état emmanché, chacun derrière une surface à contre-dépouille (36) formée à l'intérieur de l'ouverture réceptrice (8) de la partie manchon (2).

2. Raccord à emmanchement selon la revendication 1,
**caractérisé en ce que** les bras d'enclenchement (32) présentent à leurs extrémités libres pointant dans la direction de séparation (14), des segments d'actionnement (38) qui font saillie en dehors de la partie manchon (2).

3. Raccord à emmanchement selon la revendication 1 ou 2,
**caractérisé en ce que** la chambre annulaire (22) qui reçoit la garniture d'étanchéité périphérique (16) est formée par un évidement intérieur (24) de la tige mâle (6) qui élargit le diamètre intérieur, et est limitée radialement vers l'intérieur par une surface périphérique extérieure cylindrique (26) du téton mâle (20) du manchon.

4. Raccord à emmanchement selon une des revendications 1 à 3,
**caractérisé en ce que** la chambre annulaire (22) est limitée dans la direction axiale, d'une part par une surface d'épaulement radiale (28) de la tige mâle (6) et, d'autre part, par une bague d'appui (30) insérée dans la région terminale libre.

5. Raccord à emmanchement selon la revendication 4,
**caractérisé en ce que** la bague d'appui (30) est enclenchée dans la tige mâle (6).

6. Raccord à emmanchement selon une des revendications 1 à 5,
**caractérisé par** un capuchon de protection (40) fixé de façon démontable, qui recouvre la région d'emmanchement.

7. Raccord à emmanchement selon une des revendications 1 à 6,
**caractérisé en ce qu'**au moins la partie mâle (4) est constituée par une pièce de matière plastique moulée monobloc.
